Europäisches Patentamt

European Patent Office

Office européen des brevets

(11) Publication number: **0 153 417**
**A1**

## EUROPEAN PATENT APPLICATION
published in accordance with Art. 158(3) EPC

(21) Application number: **84903195.0**

(22) Date of filing: **24.08.84**

Data of the international application taken as a basis:

(86) International application number:
**PCT/JP84/00407**

(87) International publication number:
**WO85/01138 (14.03.85 85/07)**

(51) Int. Cl.⁴: **G 06 K 13/18**

(30) Priority: **31.08.83 JP 159740/83**

(43) Date of publication of application:
**04.09.85 Bulletin 85/36**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **HATTORI, Seiichi**
**1296-180-3-79-14, Katakura-cho**
**Hachioji-shi Tokyo 192(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) TAPE READER WITH REEL.

(57) The safety of a tape reader with reels is improved. An outermost-side detector (101) on the supply side and an outermost-side detector (102) on the take-up side determine whether corresponding tension arms (3), (4) are at their respective outermost positions. A detection circuit (103) determines whether or not a tape is stretched from reel to reel on the basis of the results of detection by the detectors (101), (102). When the detection circuit (103) detects the fact that no tape is stretched from reel to reel, a control means (100) suspends both a reel motor (7) on the supply side and a reel motor (8) on the take-up side.

EP 0 153 417 A1

./...

FIG.1

S P E C I F I C A T I O N

## TAPE READER WITH REELS

### TECHNICAL FIELD

The present invention relates to improvement in a tape reader with reels, and more particularly to a tape reader with reels which is capable of automatically stopping reel motors when no tape is being stretched between the reels.

### BACKGROUND ART

In a tape reader with reels, a tape which is paid out from a supply reel and taken up on a take-up reel is held in taut condition by means of a supply side and a take-up side tension arm, each energized by a spring, and the rotating speeds and directions of reel motors for driving the reels in accordance with the positions of the tension arms are controlled so that during readout of the tape the both tension arms may lie substantially centrally of their range of movement. For example, when the tension arm lies at its outermost position, the reel motor is driven in the forward direction at the highest speed, whereas when the tension arm lies at its innermost position, the reel motor is driven in the reverse direction at the highest speed, and when the tension arm lies at the center of the range of movement, the reel motor is stopped.

By the way, when the tape is broken during its readout, or when no tape is mounted on the tape reader, each tension arm is held at the outermost position by the action of the spring, resulting in the reel motor continuing to rotate in the forward direction at the highest speed. That is, the conventional tape reader with reels has been very dangeous since the reel motors keep rotating at the highest speed in the case of no tape being mounted on the tape reader.

DISCLOSURE OF THE INVENTION

The present invention is intended to automatically stop the reel motors when a tape is broken or completely taken up on the take-up reel between reels during reading the tape.

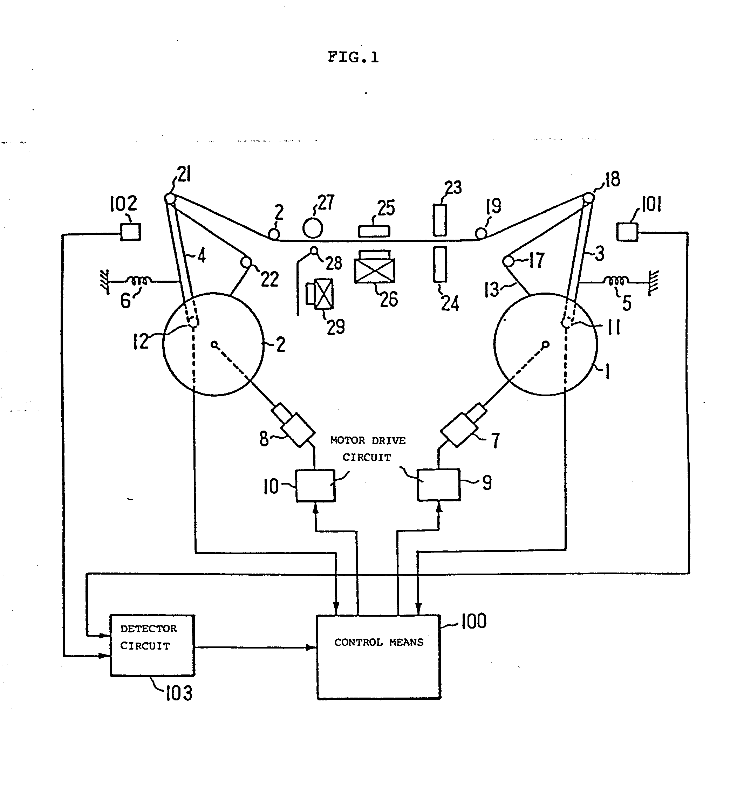

Fig. 1 is a diagram illustraing the arrangement of the present invention. A supply side tension arm 3 and a take-up side tension arm 4 energized by springs 5 and 6, respectively, stretch in taut condition a tape 13 which is paid out of a supply reel 1 and taken up on a take-up reel 2. A supply side position sensor 11 and a take-up side position sensor 12 detect the positions of the tension arms 3 and 4 and provide the results of detection to control means 100. A supply side outermost position sensor 101 and a take-up side outermost position sensor 102 detect whether the position of the tension arms 3 and 4 are the outermost or not. A detector circuit 103 detects, based on the results of detection by the supply side outermost position sensor 101 and the take-up side outermost position sensor 102, whether the tape 13 is being stretched or not. The control means 100 controls, based on the results of detection by the position sensors 11 and 12, supply side and take-up side motor drive circuits 9 and 10 which drive supply side and take-up side reel motors 7 and 8, respectively, and when it is detected by the detector circuit 103 that no tape is being stretched by the tension arms, the control means controls the supply side and take-up side motor drive circuits 9 and 10 to stop the supply side and take-up side reel motors 7 and 8. Accordingly, the present invention eliminates the posiibility of the reels continuing high-speed rotation in the case of no tape being stretched, and hence it enhances the safety of operation.

BRIEF DESCRIPTION OF THE DRAWINGS

Fig. 1 is a diagram illustrating the arrangement of the present invention; Fig. 2 is a diagram illustrating an embodiment of the present invention; and Fig. 3 is a flowchart showing the contents of process by a microcomputer 30.

BEST MODE FOR CARRYING OUT THE INVENTION

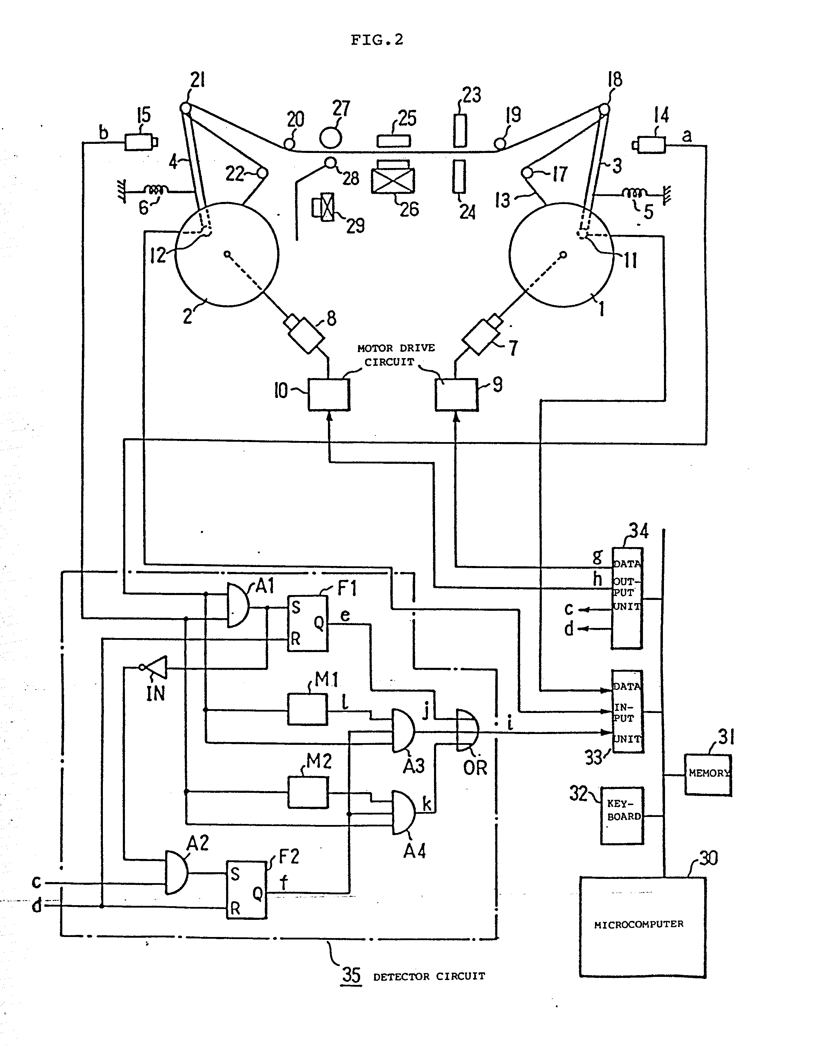

Fig. 2 is a block diagram illustrating an embodiment of the present invention. Reference numeral 1 indicates a supply reel, 2 a take-up reel, 3 a supply side tension arm, 4 a take-up side tension arm, 5 and 6 springs, 7 and 8 reel motors, 9 and 10 motor drive circuits, and 11 and 12 position sensors for detecting the positions of the supply side and take-up side tension arms 3 and 4, respectively, which are each formed by, for example, a potentiometer or the like which outputs a voltage corresponding to the positon of the tension arm. Reference numeral 13 denotes a paper tape, 14 and 15 switches which make their output signals a and b "is" when the tension arms 3 and 4 lie at their outermost position, respectively, 17 to 22 guide rollers, 23 a light emitting device, 24 a photo detector, 25 a brake shoe, 26 a brake magnet, 27 a capstan roller, 28 a pinch roller, 29 a feed magnet, 30 a microcomputer, 31 a memory, 32 a keyboard, 33 a data input unit and 34 a data output unit. Further, reference numeral 35 a detector circuit for detecting whether the tape 13 is being stretched by the tension arms or hot, and it is made up of AND gates AI to A4, an OR gate OR, flipflops F1 and F2, an inverter IN and monostable multi-

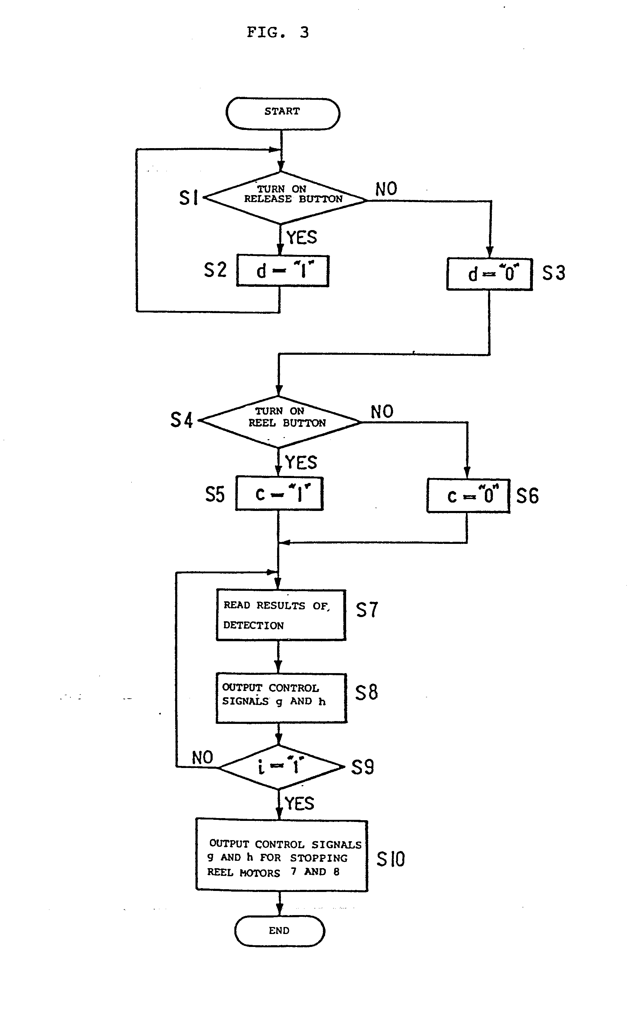

vibrators M1 and M2. Fig. 3 is a flowchart showing the contents of process by the microcomputer 30, and the operation of the illustrated embodiment will hereinafter be described with reference to Fig. 3.

When no tape is being mounted on the tape reader, the operator turns ON a release button (not shown) mounted on the keyboard 32, and when a tape is being mounted on the tape reader, he turns OFF the release button. The microcomputer 30 decides whether the release button is in the ON state or

not (step S1), and where the result of decision is YES, that is, where no tape is being mounted, it applies a control signal to the data output unit 34, making its output signal d a "1" (step S2). As a result of this, a brake magnet drive circuit and a feed magnet drive circuit (not shown) stop excitation of the brake magnet 26 and the feed magnet 29, and the flip-flops F1 and F2 which are being supplied at their reset terminals R with the signal d make their output signals e and f "0s". That is to say, when no tape is being mounted on the tape reader, excitation of the brake magnet 26 and the feed magnet 29 is cut off by turning ON the release button, permitting the mounting of a tape on the tape reader.

After this, the operator mounts a tape on the tape reader using or not using the reels and then turns OFF the release button. When detecting the turning-OFF of the release button (step S1), the microcomputer 30 applies a control signal to the data output unit 34, maing its output d a "0" (step S3).

Next, the operator turns ON or OFF a reel button (not shown) provided on the keyboard 32 depencing upon whether the reels were used or not used for mounting the tape on the tape reader. The microcomputer 30 decides whether the reel button has now been turned ON or OFF (step S4), and when deciding that the reel button is in the ON state, it provides a control signal to the data output unit 34 to make its output signal c a "1" (step S5), whereas when deciding that the reel button in the OFF state, it applies a control signal to the data output unit 34 to make its output c a "0" (step S6). Next, the microcomputer 30 reads the results of detection provided thereto from the position sensors 11 and 12 via the data input unit 33 (step S7) and, based on the results of detection, applies control signals g and h via the data output unit 34 to the motor drive circuits 9 and 10 so as to locate the supply side and take-up side tension arms 3 and 4 at the center of the range of their movement (step S8). As a result of this, the motor drive circuits 9 and 10 drive the reel motors 7 and 8 so that the supply side and take-up side tension arms 3 and 4 are positioned at the center of the range of their movement. Next, the microcomputer 30 decides whether or not a signal i is a "1" which is applied thereto from the detector circuit 35 via the data input unit 33 (step S9). Incidentally, the detector circuit 35 performs such operations as described below.

Before turning ON the reel button, since the signal d is a "1", the output signals c and f of the flip-flops F1 and F2 are both "0s" and output signals j and k of the AND gates A3 and A4 are also "0s", and consequently, the output signal i of the detector circuit 35 goes to a "0". After turning ON the reel button, if the tape 13 is being held by the supply side and take-up side tension arms 3 and 4, the both tension arms 3 and 4 are positioned substantially centrally of the range of their movement by the processes of steps S7 and S8.

Accordingly, in the case where the tape 13 is already mounted when the reel button is turned ON, the output signals a and b of the switches 14 and 15 both go to "0s" and the output signals e, j and k of the flip-flop Fl and the AND gates A3 and A4 all go to "0s", resulting in the output signal i of the detector circuit 35 going to a "0". When the reel button is turned ON without mounting the tape 13, the both tension arms 3 and 4 both lie at their outermost position and the switches 14 and 15 make their output signals a and b "1s". Accordingly, in the case of turning ON the power source switch without mounting the tape 13, the output signal of the AND gate Al goes to a "1" and the output signal e of the flip-flop Fl goes to a "1", in consequence of which the output signal i of the detector circuit 35 goes to a "1".

During readout of the tape 13 the both tension arms 3 and 4 are positioned substantially at the center of the range of their movement by the processing of steps S7 and S8 and the output signals a and b of the switches 14 and 15 both go to "0s", making the output signal i of the detector circuit 35 a "0". Assuming that the tape 13 is broken during the tape readout and the supply side tension arm 3 is brought to the outermost position under the action of the spring 5, the output signal a of the switch 14 goes to a "1", by which the monostable multivibrator Ml is triggered, making its outpit signal *l* a "0" for a fixed period of time t. Accordingly, in

the event that the output signal a of the switch 14 remains at the "1"level for longer than the fixed period of time t, the output signal j of the AND gate A3 goes to a "1" and the output signal i of the detector circuit 35 goes to a "1". Further, the monostable multivibrator M2 also has the same function as the monostable multivibrator M1, and consequently, also when the output signal b of the switch 15 remains at the "1" level for longer than the fixed period of time t, the output signal i of the detector circuit 35 goes to a "1". In other words, the detector circuit 35 makes its output signal i a "1" when the reel button is turned ON without mounting the tape 13 and when the tape 13 is broken during the tape readout and the tension arms 3 and 4 each assume the outermost position.

When deciding in step S9 that the signal i is at the "1" level the microcomputer 30 supplies the motor drive circuits 9 and 10 with the control signals g and h for deenergizing the reel motors 7 and 8 (step S10), by which the reel motors 7 and 8 are stopped, and the microcomputer 30 completes its processing. When deciding in step S9 that the signal i is at the "0" level, the microcomputer 30 returns to the process of step S7.

As described above, the present invention os provided with supply side and take-up side outermost position sensors respectively formed by the switches 14 and 15 or the like, for detecting whether the tension arms lie at their outermost position, a detector circuit for detecting, based on the results of detection by the supply side and take-up side outermost position sensors, whether a tape is being mounted or not, and control means formed by the microcomputer 30 or the like, for stopping reel motors when it is detected by the detector circuit that no tape is being mounted or streched by the tension arms, With such an arrangement, the present invention permits automatic stopping of the reel motors in the case where no tape is mounted, or stretched by the tension arms, and hence the invention possesses the advantage of less dangerous operation than in the prior art example.

While in the above-described embodiment it is detected by the switches 14 and 15 whether the supply side and take-up side tension arms 3 and 4 have been brought to their outermost position, it is a matter of course that the above detection may also be effected based on the results of detection by the position sensors 11 and 12.

0153417

C L A I M

A tape reader, characterized by the provision of:
supply side and take-up side tension arms energized by
springs, respectively, for stretching in taut condition a
tape which is paid out of a supply reel and taken up on
a take-up reel; supply side and take-up side reel motors for
driving the supply reel and the take-up reel; supply side
and take-up side motor drive circuits for driving the supply
side and take-up side reel motors; supply side and take-up
side position sensors for detecting the positions of the
supply side and take-up side tension arms; supply side and
take-up side outermost position sensors for detecting whether the
the positions of the supply side and take-up side tension arms
are outermost or not; a detector circuit for detecting,
based on the results of detection by the supply side and
take-up side outermost position sensors, whether the tape
is being stretched by the supply side and take-up side
tension arms; and a control means for controlling the supply
side and take-up side motor drive circuits based on the
results of detection by the supply side and take-up side
position sensors and for controlling the supply side and
take-up side motor drive circuits to stop the supply side
and take-up side reel motors when it is detected by the
detector circuit that the tape is not being stretched.

FIG.1

FIG.2

3    0153417

FIG. 3

START

S1 — TURN ON RELEASE BUTTON — NO

YES

S2  d — "1"          d = "0"  S3

S4 — TURN ON REEL BUTTON — NO

YES

S5  c — "1"          c = "0"  S6

READ RESULTS OF DETECTION  S7

OUTPUT CONTROL SIGNALS g AND h  S8

NO — i — "1"  S9

YES

OUTPUT CONTROL SIGNALS g AND h FOR STOPPING REEL MOTORS 7 AND 8  S10

END

# INTERNATIONAL SEARCH REPORT

International Application No. PCT/JP84/00503 **0153417**

## I. CLASSIFICATION OF SUBJECT MATTER (if several classification symbols apply, indicate all) [3]

According to International Patent Classification (IPC) or to both National Classification and IPC

Int. Cl$^3$ G06K 13/18

## II. FIELDS SEARCHED

### Minimum Documentation Searched [4]

| Classification System | Classification Symbols |
|---|---|
| IPC | G06K 13/18, 13/02, 13/00 |

### Documentation Searched other than Minimum Documentation to the Extent that such Documents are Included in the Fields Searched [5]

| | |
|---|---|
| Jitsuyo Shinan Koho | 1965 - 1984 |
| Kokai Jitsuyo Shinan Koho | 1971 - 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, Y1, 39-1946 (Tokyo Denki Onkyo Kabushiki Kaisha) 27 January 1964 (27. 01. 64) | 1 |
| Y | JP, B1, 46-41489 (Nippon Electric Co., Ltd.) 8 December 1971 (08. 12. 71) | 1 |
| Y | JP, B1, 50-9648 (Hitachi, Ltd.) 15 April 1975 (15. 04. 75) | 1 |
| Y | JP, B1, 50-40614 (Olivetti) 25 December 1975 (25. 12. 75) | 1 |
| Y | JP, Y2, 53-8560 (Toshiba Corp.) 6 March 1978 (06. 03. 78) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| October 30, 1984   (30. 10. 84) | November 19, 1984   (19. 11. 84) |

| International Searching Authority [1] | Signature of Authorized Officer [20] |
|---|---|
| Japanese Patent Office | |

Form PCT/ISA/210 (second sheet) (October 1981)